# FASCICULE DE BREVET EUROPEEN

(11) **EP 2 898 927 B1**
(45) Date de publication et mention de la délivrance du brevet: **01.05.2019**
(21) Numéro de dépôt: 15151152.4
(22) Date de dépôt: 14.01.2015
(51) Int. Cl.: A63B 29/02

(54) **Dispositif d'attache de deux connecteurs mécaniques**
Anschlussvorrichtung von zwei mechanischen Anschlüssen
Device for fastening two mechanical connectors

(30) Priorité: 22.01.2014 FR 1400121
(43) Date de publication de la demande: 29.07.2015
(73) Titulaire: Zedel, 38920 Crolles (FR)
(72) Inventeur: Coursimault, Antoine, 38420 Revel (FR)
(74) Mandataire: Talbot, Alexandre

(56) Documents cités:
- CH-A5- 688 573
- US-B1- 7 036 780

## Description

### Domaine technique de l'invention

L'invention est relative à un dispositif d'attache de deux connecteurs mécaniques utilisés dans les sports de montagne.

### État de la technique

Dans des sports de montagne tels que l'escalade ou l'alpinisme, il est très courant de recourir à des dispositifs d'attache de deux connecteurs. Par exemple, pour grimper en tête, un utilisateur se sert de dégaines pour connecter une corde à différents points d'ancrage sur une paroi (plaquettes, coinceurs, friends, broches à glace, etc.).

Les dégaines comportent deux connecteurs tels que des mousquetons rapides, reliés par une sangle. Cette dernière comprend une première extrémité, une partie centrale et une deuxième extrémité, les première et deuxième extrémités étant repliées et cousues au niveau de la partie centrale. De part et d'autre de cette zone cousue se trouvent une première boucle et une deuxième boucle, chaque boucle étant configurée pour permettre le passage d'un connecteur. La connexion mécanique entre les deux mousquetons est assurée par la tenue mécanique de la sangle et des courtures.

Pour que l'utilisateur puisse progresser en toute sécurité lorsqu'il grimpe, il est primordial que la sangle soit en bon état, et ne présente pas de portions décousues ou arrachées. Or, lorsque la paroi sur laquelle l'utilisateur grimpe est dans un matériau très abrasif, par exemple en salle, ou lorsqu'il y a beaucoup de tirage en cas de grimpe en extérieur, l'usure de la sangle est rapide. CH 688573 et US 7036780 décrivent un dispositif d'attache comportant une sangle et une enveloppe de protection.

### Objet de l'invention

Un objet de l'invention est de proposer un dispositif d'attache de deux connecteurs ayant une résistance renforcée à l'abrasion et une durée de vie plus longue.

A cet effet, le dispositif d'attache comporte :
- une sangle comprenant des première et deuxième extrémités opposées et pliées de manière à définir des première et deuxième boucles séparées par une partie centrale sur laquelle sont solidarisées les première et deuxième extrémités, chaque boucle étant configurée pour permettre le passage d'un connecteur,
- une enveloppe de protection monobloc comportant des parois principales et des parois latérales connectées de manière permanente, les parois principales recouvrant des faces principales de la sangle, et les parois latérales recouvrant des faces latérales de la partie centrale, de manière à définir une première ouverture autour de la première boucle, et une deuxième ouverture autour de la deuxième boucle, chaque ouverture étant configurée pour permettre le passage d'un connecteur, l'une au moins des ouvertures étant configurée pour permettre l'insertion de la sangle dans l'enveloppe de protection, où la première ouverture et la deuxième ouverture forment chacune une boucle additionnelle dans un plan de coupe longitudinal (A-A) de manière à recouvrir la face externe des première et deuxième boucles dans ledit plan de coupe longitudinal (A-A).

La tenue mécanique de la sangle peut avantageusement être supérieure à la tenue mécanique de l'enveloppe de protection dans une direction longitudinale de la sangle reliant la première boucle à la deuxième boucle. Selon un mode de réalisation, l'enveloppe de protection monobloc peut comporter des parois latérales ajourées dans la partie centrale, et peut être fabriquée dans un matériau transparent.

Par ailleurs, la première boucle peut avoir une section plus petite que la deuxième boucle, et la première ouverture peut avoir une section plus petite que la deuxième ouverture.

Les première et deuxième ouvertures peuvent également comporter des moyens de renforcement mécanique, et par exemple former une surépaisseur de l'enveloppe de protection.

La forme externe de la sangle peut par ailleurs être complémentaire de la forme de l'intérieur de l'enveloppe de protection.

Enfin, le dispositif d'attache peut comporter un connecteur, et l'enveloppe de protection peut comporter un organe de blocage configuré pour entraver les mouvements du connecteur relativement à la sangle et à l'enveloppe de protection.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :

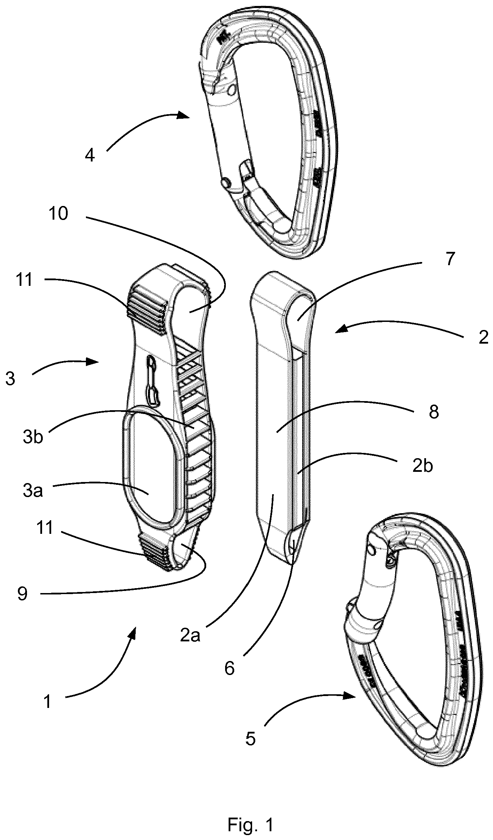

- la figure 1 est une vue éclatée du dispositif d'attache de deux connecteurs mécaniques selon un mode de réalisation,
- la figure 2 représente le dispositif d'attache selon le mode de réalisation de la figure 1 lorsque les différentes pièces sont assemblées,
- la figure 3 illustre la méthode d'assemblage des pièces d'un dispositif d'attache selon le mode de réalisation de la figure 1.

### Description détaillée

Le dispositif d'attache 1 comporte une sangle 2 et une enveloppe de protection 3 configurées pour relier deux connecteurs mécaniques 4 et 5. Les connecteurs 4 et 5 ont avantageusement une forme annulaire, et peuvent par exemple être des mousquetons, des mousquetons rapides, des maillons rapides, etc.

La sangle 2 est fabriqué dans un matériau souple tel que du polyamide, du polyester, ou du polyèthylène à haut module, par exemple du dyneema®. La sangle 2 comprend des première et deuxième extrémités, qui sont repliées de manière à définir des première et deuxièmes boucles 6 et 7 séparées par une partie centrale 8 sur laquelle sont solidarisées les première et deuxième extrémités.

Selon un mode de réalisation, les première et deuxième extrémités peuvent être repliées l'une sur l'autre et cousues à la partie centrale 8, de manière à avoir une triple épaisseur de sangle 2 dans cette zone. On peut également envisager de solidariser les première et deuxième extrémités de la sangle 2 de manière juxtaposée sur la partie centrale 8.

La qualité de la solidarisation des différentes parties de la sangle 2 est primordiale pour assurer la bonne tenue mécanique du dispositif d'attache 1 dans une direction longitudinale A-A, et donc la sécurité de l'utilisateur.

Par ailleurs, les première et deuxième boucles 6 et 7 sont avantageusement configurées pour permettre le passage des connecteurs 4 et 5. Les première et deuxième boucles 6 et 7 présentent donc un diamètre minimal assurant le passage des connecteurs 4 et 5.

L'enveloppe de protection 3 est quant à elle monobloc, et comporte des parois principales 3a et des parois latérales 3b connectées de manière permanente. Cette propriété permet d'éviter les contacts entre la sangle 2 et la paroi sur laquelle le dispositif d'attache 1 est positionné. L'enveloppe de protection 3 définit par conséquent une cavité qui emprisonne latéralement la sangle 2 pour éviter toute sortie intempestive.

Le rôle de l'enveloppe de protection 3 est de protéger la sangle 2 afin de limiter son abrasion. Sa tenue mécanique n'est pas prévue pour assurer la sécurité de l'utilisateur, par exemple en cas de chute lorsque ce dernier grimpe en tête.

La tenue mécanique de la sangle 2 dans la direction longitudinale A-A est donc supérieure à la tenue mécanique de l'enveloppe de protection 3 dans cette même direction.

La forme de l'intérieur de l'enveloppe de protection 3 est adaptée à la forme de la sangle 2. Avantageusement, la forme de la sangle 2 est complémentaire de la forme de la cavité dans l'enveloppe de protection 3, afin de réduire les déplacements de la sangle 2 à l'intérieur de l'enveloppe de protection 3.

Lorsque le dispositif d'attache 1 est assemblé, les parois principales 3a de l'enveloppe de protection 3 recouvrent les faces principales 2a de la sangle 2, et les parois latérales 3b de l'enveloppe de protection 3 recouvrent les faces latérales 2b de la sangle 2, de manière à définir une première ouverture 9 autour de la première boucle 6 et une deuxième ouverture 10 autour de la deuxième boucle 7. Les dimensions de chaque ouverture 9 et 10 sont adaptées pour permettre le passage des connecteurs 4 et 5.

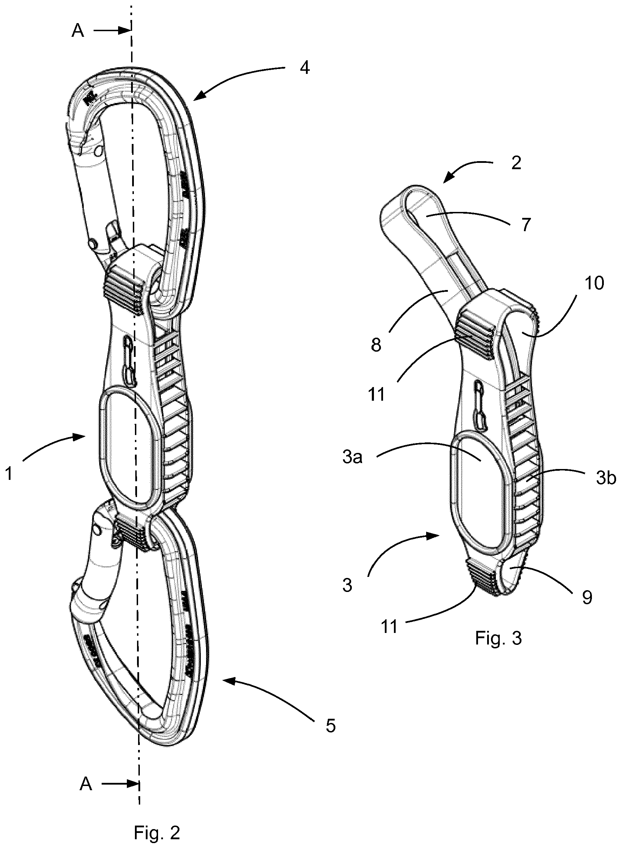

Les formes des boucles 6 et 7 et des ouvertures 9 et 10 sont préférentiellement complémentaires dans un plan de coupe longitudinal A-A (cf. figure 2), de sorte qu'il est difficile de placer les connecteurs 4 et 5 entre l'enveloppe de protection 3 et la sangle 2.

Par ailleurs, l'une au moins des ouvertures 9 ou 10 est configurée pour permettre l'insertion de la sangle 2 dans l'enveloppe de protection 3, comme cela est représenté à la figure 3. L'insertion de la sangle 2 dans l'enveloppe de protection 3 est rendue possible grâce à la souplesse de la sangle 2.

Dans le mode de réalisation illustré sur les figures annexées, l'ouverture 10 est plus grande que l'ouverture 9 pour faciliter l'introduction de la sangle 2. Il suffit alors de pousser la sangle 2 à l'intérieur de l'enveloppe de protection 3 pour réaliser l'assemblage du dispositif d'attache 1.

Le fait que la sangle 2 puisse être retirée de l'enveloppe de protection 3 présente notamment l'avantage de permettre un contrôle régulier de l'état de la sangle 2 et éventuellement son remplacement.

Selon un mode de réalisation particulier, les première et deuxième boucles 6 et 7 de la sangle 2 peuvent ne pas avoir les mêmes dimensions. Cela permet de limiter les mouvements de l'un des connecteurs par rapport à l'autre.

Il est par exemple avantageux de placer sur la paroi un connecteur mobile par rapport au dispositif d'attache 1, et de placer la corde dans un connecteur dont la position est plus stable par rapport au dispositif d'attache 1. De cette façon, lorsque l'utilisateur dépasse le point auquel il est attaché à la paroi, le dispositif d'attache 1 pivote facilement le long du connecteur fixé sur la paroi et les frottements entre le dispositif d'attache 1 et la paroi sont limités.

Dans le mode de réalisation illustré sur les figures, la première boucle 6 est plus petite que la deuxième boucle 7. Elle est avantageusement placée au niveau de l'ouverture 9 qui est plus petite que l'ouverture 10. De cette façon, l'ouverture 9 participe également à la stabilisation du connecteur 5 par rapport au dispositif d'attache 1.

L'utilisateur peut alors avantageusement attacher le connecteur 4 à la paroi, le connecteur 4 étant mobile par rapport au dispositif d'attache 1, et placer la corde à l'intérieur du connecteur 5, qui est très peu mobile par rapport au dispositif d'attache 1.

Selon un mode de réalisation particulier, on peut prévoir qu'un organe de blocage (non représenté) soit positionné au niveau de la plus petite des ouvertures de l'enveloppe de protection 3 pour entraver encore plus les mouvements du connecteur qui la traverse. Lors de l'insertion du connecteur dans la boucle et dans l'ouverture, l'organe de blocage se déforme donc pour limiter le mouvement du connecteur, de préférence le connecteur associé à la plus petite des boucles.

L'organe de blocage peut par exemple être une pièce configurée pour diminuer les dimensions de la plus petite des ouvertures. Il peut s'agir d'une pièce configurée pour fermer en partie la plus petite des ouvertures, ou une surépaisseur à l'intérieur de la plus petite des ouvertures, pour en diminuer la section.

Pour garantir la souplesse de l'enveloppe de protection 3, cette dernière est fabriquée dans un matériau plastique tel que du polyuréthane thermoplastique, matériau très résistant à l'abrasion. Celui-ci est avantageusement transparent pour pouvoir contrôler facilement l'état de la sangle 2 sans avoir à l'enlever de l'enveloppe de protection.

Selon un mode de réalisation avantageux illustré sur les figures, les parois latérales 3b de l'enveloppe de protection 3 peuvent être ajourées pour améliorer les propriétés de torsion du dispositif d'attache 1. Toutefois il est préférable que l'épaisseur des parois latérales 3b soit suffisante pour empêcher la détérioration de la sangle 2 par frottements lorsque le dispositif d'attache 1 est utilisé. Ici, l'épaisseur des parois latérales 3b est environ égal à la moitié de la largeur des faces principales de la sangle 2. Le fait d'avoir des parois latérales 3b ajourées facilite également le contrôle de l'usure ou du séchage de la sangle 2.

Lorsqu'un dispositif d'attache 1 tel qu'une dégaine est utilisé, l'abrasion de la sangle 2 est rapide au niveau des boucles 6 et 7 à travers lesquelles passent les connecteurs 4 et 5. Il est donc important de protéger les boucles 6 et 7 de façon efficace.

Pour cela, la face externe des boucles 6 et 7 est recouverte par l'enveloppe de protection 3 et l'intérieur de chaque boucle est rempli par un connecteur 4 ou 5, qui vient plaquer la boucle contre l'enveloppe de protection 3. Cette configuration limite le déplacement des boucles 6 et 7 dans l'enveloppe de protection 3, ce qui permet de réduire l'usure de la sangle en cas d'introduction d'impuretés abrasives entre la sangle 2 et l'enveloppe de protection 3.

Ces dernières sont avantageusement protégées au moyen des ouvertures de l'enveloppe de protection 3. Toutefois, pour améliorer la protection de la sangle 2, l'une au moins des ouvertures peut être dotée de moyens de renforcement mécanique, en particulier l'ouverture à travers laquelle passe le connecteur qui est attaché à la paroi, puisqu'il s'agit de la partie de la sangle 2 qui est la plus sujette aux frottements.

Dans le mode de réalisation illustré, les deux ouvertures 9 et 10 comportent des moyens de renforcement mécanique, et plus précisément des surépaisseurs 11 telles que des stries.

Ainsi, on fournit un dispositif efficace, simple à réaliser, et particulièrement adapté pour des utilisations en escalade ou alpinisme lorsque le dispositif d'attache 1 est en contact avec des matériaux très abrasifs.

## Revendications

1. Dispositif d'attache (1) de deux connecteurs mécaniques (4, 5), le dispositif d'attache (1) comportant :
• une sangle (2) comprenant des première et deuxième extrémités opposées et pliées de manière à définir des première et deuxième boucles (6, 7) séparées par une partie centrale (8) sur laquelle sont solidarisées les première et deuxième extrémités, chaque boucle (6, 7) étant configurée pour permettre le passage d'un connecteur (4, 5),
• une enveloppe de protection (3) monobloc comportant des parois principales (3a) et des parois latérales (3b) connectées de manière permanente, les parois principales (3a) recouvrant des faces principales (2a) de la sangle (2), et les parois latérales (3b) recouvrant des faces latérales (2b) de la partie centrale (8), de manière à définir une première ouverture (9) autour de la première boucle (6), et une deuxième ouverture (10) autour de la deuxième boucle (7), chaque ouverture (9, 10) étant configurée pour permettre le passage d'un connecteur (4, 5), l'une au moins des ouvertures (9, 10) étant configurée pour permettre l'insertion de la sangle (2) dans l'enveloppe de protection (3),
dispositif d'attache **caractérisé en ce que** la première ouverture (9) et la deuxième ouverture (10) forment chacune une boucle additionnelle dans un plan de coupe longitudinal (A-A) de manière à recouvrir la face externe des première et deuxième boucles (6, 7) dans ledit plan de coupe longitudinal (A-A).

2. Dispositif d'attache (1) selon la revendication 1, dans lequel la tenue mécanique de la sangle (2) est supérieure à la tenue mécanique de l'enveloppe de protection (3) dans une direction longitudinale de la sangle (2) reliant la première boucle (6) à la deuxième boucle (7).

3. Dispositif d'attache (1) selon l'une quelconque des revendications 1 ou 2, dans lequel l'enveloppe de protection (3) comporte des parois latérales (3b) ajourées dans la partie centrale (8).

4. Dispositif d'attache (1) selon l'une quelconque des revendications 1 à 3, dans lequel l'enveloppe de protection (3) est fabriquée dans un matériau transparent.

5. Dispositif d'attache (1) selon l'une quelconque des revendications 1 à 4, dans lequel la première boucle (6) a une section plus petite que la deuxième boucle (7), et dans lequel la première ouverture (9) a une section plus petite que la deuxième ouverture (10).

6. Dispositif d'attache (1) selon l'une quelconque des revendications 1 à 5, dans lequel l'une au moins des première et deuxième ouvertures (9, 10) comporte des moyens de renforcement mécanique (11).

7. Dispositif d'attache (1) selon la revendication 6, dans lequel les moyens de renforcement mécanique (11) forment une surépaisseur de l'enveloppe de protection (3).

8. Dispositif d'attache (1) selon l'une quelconque des revendications 1 à 7, dans lequel la forme externe de la sangle (2) est complémentaire de la forme de l'intérieur de l'enveloppe de protection (3).

9. Dispositif d'attache (1) selon l'une quelconque des revendications 1 à 8, comportant un connecteur (5), et dans lequel l'enveloppe de protection (3) comporte un organe de blocage configuré pour entraver les mouvements du connecteur (5) relativement à la sangle (2) et à l'enveloppe de protection (3).

## Patentansprüche

1. Einhängevorrichtung (1) für zwei mechanische Verbindungsteile (4, 5), wobei die Einhängevorrichtung (1) umfasst:
• einen Riemen (2), der ein erstes und ein zweites Ende umfasst, die entgegengesetzt zu einander und so umgelegt sind, dass sie eine erste und eine zweite Schlaufe (6, 7) bilden, die durch einen Mittelteil (8) voneinander getrennt sind, in dem das erste und zweite Ende fest miteinander verbunden sind, wobei jede Schlaufe (6, 7) so vorgesehen ist, dass sie das Durchführen eines Verbindungsteils (4, 5) erlaubt,
• eine Schutzhülle (3) aus einem Stück, die Hauptwände (3a) und Seitenwände (3b) umfasst, die dauerhaft miteinander verbunden sind, wobei die Hauptwände (3a) Hauptwände (2a) des Gurts (2) bedecken und die Seitenwände (3b) Seitenwände (2b) des Mittelteils (8) bedecken und so eine erste Öffnung (9) um die erste Schlaufe (6) und eine zweite Öffnung (10) um die zweite Schlaufe (7) bilden, wobei jede Öffnung (9, 10) so vorgesehen ist, dass sie das Durchführen eines Verbindungsteils (4, 5) erlaubt, wobei mindestens eine der Öffnungen (9, 10) so vorgesehen ist, dass sie das Einführen des Riemens (2) in die Schutzhülle (3) erlaubt,
Einhängevorrichtung, die **dadurch gekennzeichnet ist, dass** die erste Öffnung (9) und die zweite Öffnung (10) jeweils eine Schlaufe auf einer Längsschnittebene (A-A) bilden, und dadurch, dass die erste Öffnung (9) und die zweite Öffnung (10) jeweils eine Schlaufe bilden, die so vorgesehen ist, dass sie das Durchführen des Verbindungsteils (4, 5) erlaubt.

2. Einhängevorrichtung (1) nach Anspruch 1, bei der die mechanische Festigkeit des Riemens (2) in einer Längsrichtung des Riemens (2), der die erste Schlaufe (6) mit der zweiten Schlaufe (7) verbindet, größer ist als die mechanische Festigkeit der Schutzhülle (3).

3. Einhängevorrichtung (1) nach einem der Ansprüche 1 oder 2, bei der die Schutzhülle (3) Seitenwände (3b) aufweist, die im mittleren Bereich (8) durchbrochen sind.

4. Einhängevorrichtung (1) nach einem der Ansprüche 1 bis 3, bei der die Schutzhülle (3) aus einem durchsichtigen Material besteht.

5. Einhängevorrichtung (1) nach einem der Ansprüche 1 bis 4, bei der die erste Schlaufe (6) einen kleineren Querschnitt hat als die zweite Schlaufe (7) und bei der die erste Öffnung (9) einen kleineren Querschnitt hat als die zweite Öffnung(10).

6. Einhängevorrichtung (1) nach einem der Ansprüche 1 bis 5, bei der mindestens eine der ersten und zweiten Öffnungen (9, 10) Mittel zur mechanischen Verstärkung (11) umfasst.

7. Einhängevorrichtung (1) nach Anspruch 6, bei der die Mittel zur mechanischen Verstärkung (11) eine Verdickung der Schutzhülle (3) bilden.

8. Einhängevorrichtung (1) nach einem der Ansprüche 1 bis 7, bei der die äußere Form des Gurts (2) komplementär zu der Form des Inneren der Schutzhülle (3) ist.

9. Einhängevorrichtung (1) nach einem der Ansprüche 1 bis 8, die ein Verbindungsteil (5) umfasst und bei der die Schutzhülle (3) ein Blockierungselement umfasst, das so vorgesehen ist, dass es Bewegungen des Verbindungsteils (5) zum Gurt (2) und zur Schutzhülle (3) verhindert.

## Claims

1. An attachment device (1) for attaching two mechanical connectors (4, 5), the attachment device (1) comprising:
• a strap (2) comprising opposite first and second ends folded so as to define first and second loops (6, 7) separated by a central part (8) on which the first and second ends are secured, each loop (6, 7) being configured to allow a connector (4, 5) to pass,
• a monoblock protective enclosure (3) comprising main flanges (3a) and side flanges (3b) connected in permanent manner, the main flanges (3a) covering main surfaces (2a) of the strap (2), and the side flanges (3b) covering lateral surfaces (2b) of the central part (8), so as to define a first opening (9) around the first loop (6), and a second opening (10) around the second loop (7), each opening (9, 10) being configured to allow passage of a connector (4, 5), at least one of the openings (9, 10) being configured to enable the strap (2) to be inserted in the protective enclosure (3),
attachment device **characterized in that** each of the first opening (9) and the second opening (10) form a loop in a longitudinal cross-section plan (A-A) and **in that** each of the first opening (9) and the second opening (10) form a loop configured to allow a connector (4, 5) to pass

2. The attachment device (1) according to claim 1, wherein the mechanical strength of the strap (2) is greater than the mechanical strength of the protective enclosure (3) in a longitudinal direction of the strap (2) connecting the first loop (6) to the second loop (7).

3. The attachment device (1) according to either one of claims 1 or 2, wherein the protective enclosure (3) comprises apertured side flanges (3b) in the central part (8).

4. The attachment device (1) according to either one of claims 1 to 3, wherein the protective enclosure (3) is made from a transparent material.

5. The attachment device (1) according to any one of claims 1 to 4, wherein the first loop (6) has a smaller cross-section than the second loop (7), and wherein the first opening (9) has a smaller cross-section than the second opening (10).

6. The attachment device (1) according to any one of claims 1 to 5, wherein at least one of the first and second openings (9, 10) comprises mechanical strengthening means (11).

7. The attachment device (1) according to claim 6, wherein the mechanical strengthening means (11) form an extra thickness of the protective enclosure (3).

8. The attachment device (1) according to any one of claims 1 to 7, wherein the external shape of the strap (2) is complementary to the shape of the inside of the protective enclosure (3).

9. The attachment device (1) according to any one of claims 1 to 8, comprising a connector (5), and wherein the protective enclosure (3) comprises a blocking part configured to prevent movements of the connector (5) relatively to the strap (2) and to the protective enclosure (3).
